# EUROPÄISCHE PATENTSCHRIFT

(11) **EP 2 918 935 B1**
(45) Veröffentlichungstag und Bekanntmachung des Hinweises auf die Patenterteilung: **06.05.2020**
(21) Anmeldenummer: 15157794.7
(22) Anmeldetag: 05.03.2015
(51) Int. Cl.: F24F 12/00, F24F 11/00, F24F 11/77

(54) **VERFAHREN ZUR RAUMLÜFTUNG UND LÜFTUNGSSYSTEM HIERFÜR**
METHOD FOR ROOM VENTILATION AND VENTILATION SYSTEM FOR SAME
PROCÉDÉ D'AÉRATION DE PIÈCE ET SYSTÈME D'AÉRATION DE PIÈCE CORRESPONDANT

(30) Priorität: 10.03.2014 DE 102014103155
(43) Veröffentlichungstag der Anmeldung: 16.09.2015
(73) Patentinhaber: Pluggit GmbH, 81829 München (DE)
(72) Erfinder: Bolsmann, Christian, 85560 Ebersberg (DE)
(74) Vertreter: Keil & Schaafhausen Patentanwälte PartGmbB

(56) Entgegenhaltungen:
- WO-A1-2012/025122
- WO-A2-2008/102227
- DE-A1- 3 224 277
- DE-U1- 20 214 833
- DE-U1- 20 214 833
- DE-U1-202011 102 188
- DE-U1-202011 102 188
- DE-U1-202014 106 115

## Beschreibung

Die Erfindung betrifft ein Verfahren zur Raumlüftung mittels eines Lüftungssystems sowie ein entsprechendes Lüftungssystem.

Beispielsweise für Wohngebäude ist es üblich, Lüftungssysteme vorzusehen, die einen ausreichenden Luftaustausch erlauben, ohne dabei zu einem so großen Wärmeverlust zu führen, wie dies bei einer Lüftung durch Öffnen der Fenster der Fall ist. Ein insbesondere zur Nachrüstung in Gebäuden geeignetes Lüftungssystem ist aus der DE 10 2008 011 348 A1 bekannt. Darüber hinaus gibt es dezentrale Lüftungsgeräte, die für die Be- und Entlüftung einzelner Räume in der Außenwand installiert werden und mit einer ausgeglichenen Volumenstrombilanz betrieben werden sollen. In derartige Einzelraumlüftungsgeräte ist meist ein Wärmetauscher integriert, wobei die Geräte alternierend im Zuluftbetrieb und Abluftbetrieb betrieben werden, so dass sich der Wärmetauscher im Abluftbetrieb aufladen kann und sich die im Zuluftbetrieb zugeführte Luft in dem Wärmetauscher erwärmt.

Ein sogenanntes Querlüften, d.h. der Luftaustausch über mehrere Räume hinweg, ist bei solchen Systemen nicht möglich. Darüber hinaus entstehenden Nachteile, wenn ein fensterloser Feuchtraum in der Wohnung vorgesehen ist, der entsprechend den Vorgaben der DIN 18017 mit einem Abluftventilator versehen ist und mit einer Nachlaufzeit von meist 15 Minuten verbrauchte Luft und insbesondere Feuchtigkeit aus dem Feuchtraum abführt. Dies führt dazu, dass unabhängig vom Betriebszustand der Lüftungsgeräte in den übrigen Räumen Luft aus diesen in den Feuchtraum angesaugt wird. Hierdurch entladen sich sämtliche Wärmetauscher der mit dem Feuchtraum in Strömungsverbindung stehenden Räume. Bei einer üblichen Nutzung des Feuchtraums mehrere Male am Tag entstehen hierdurch insgesamt sehr lange Phasen, in denen die Wärmetauscher vollständig entladen sind und damit in erheblichem Maße Wärme abgegeben wird. Zudem wird durch den Abluftventilator verbrauchte und/oder feuchte Luft, z.B. aus der Küche, in die Wohnung gesaugt.

Aus der DE 202 14 833 U1 ist ein Luftaustauschsystem für die Belüftung eines Raumes eines Gebäudes bekannt. Dieses System weist einen Plattenwärmetauscher auf, an dessen einer Seite ein Fortluftradiallüfter und an dessen anderer Seite ein Zuluftansaugradiallüfter vorgesehen sind. Diese Lüfter können mit unterschiedlicher Drehfrequenz betrieben werden.

Aufgabe der vorliegenden Erfindung ist es demgegenüber ein Verfahren zur Raumlüftung sowie ein Lüftungssystem hierfür bereitzustellen, welches die oben genannten Nachteile bekannter Systeme vermeidet.

Diese Aufgabe wird mit einem Verfahren nach Anspruch 1 sowie einem Lüftungssystem nach Anspruch 7 gelöst. Der Erfindung liegt dabei der Gedanke zugrunde, mehrere Einzelraumlüftungsgeräte eines Lüftungssystems über eine gemeinsame Steuer- und/oder Regeleinrichtung zu verbinden, mit der die Ventilatoren der Einzelraumlüftungsgeräte in verschiedenen bedarfsweise einstellbaren Betriebszuständen betrieben werden können. Diese Betriebszustände sind vorzugsweise so ausgelegt, dass trotz unterschiedlicher Anforderungen an den Luftaustausch der Wärmeverlust minimiert wird.

Erfindungsgemäß werden die Ventilatoren in einem ersten Betriebszustand in einem Zyklus alternierend für eine erste Zeitspanne im Zuluftbetrieb und für eine daran anschließende zweite Zeitspanne im Abluftbetrieb betrieben. Eine ausgeglichene Volumenstrombilanz kann dadurch erreicht werden, dass die im Zuluftbetrieb zugeführte Luftmenge des Lüftungssystems der im Abluftbetrieb abgeführten Luftmenge des Lüftungssystems entspricht. Mit anderen Worten wird in dieser alternierenden Betriebsweise nach einer bestimmten Laufzeit im Zuluftbetrieb, d.h. bei einer Luftströmung von außen nach innen, die Drehrichtung des Ventilators gewechselt, so dass im Abluftbetrieb eine Luftströmung von innen nach außen stattfindet. Durch diesen Wechsel der Laufrichtung wird der Wärmetauscher des Einzelraumlüftungsgeräts je nach Laufrichtung des Ventilators beladen oder entladen.

In einem optionalen zweiten Betriebszustand werden die Ventilatoren ebenfalls in einem Zyklus alternierend für eine erste Zeitspanne im Zuluftbetrieb und für eine anschließende zweite Zeitspanne im Abluftbetrieb betrieben, wobei die im Zuluft zugeführte Luftmenge wenigstens eines ersten Ventilators größer ist als die eines zweiten Ventilators und die im Abluftbetrieb abgeführte Luftmenge wenigstens eines Ventilators (z.B. des wenigstens einen zweiten Ventilators) kleiner als die wenigstens eines anderen Ventilators (z.B. des wenigstens einen ersten Ventilators) ist. Auch in diesem optionalen zweiten Betriebszustand entspricht die im Zuluftbetrieb zugeführte Luftmenge des Lüftungssystems vorzugsweise der im Abluftbetrieb abgeführten Luftmenge des Lüftungssystems. Indem wenigstens ein Ventilator definiert eine größere Luftmenge zuführt und wenigstens ein anderer Ventilator definiert eine größere Luftmenge abführt, entsteht eine Querströmung in den bspw. durch Türunterschnitte in einem Lüftungsverbund stehenden Räumen einer Wohneinheit.

Vorzugsweise ist die Steuer- und/oder Regeleinrichtung so einstellbar oder eingerichtet, dass ein Überströmen von verbrauchter Luft aus bspw. Feuchträumen in einen anderen Raum verhindert werden kann. Ein mögliches Einsatzbeispiel für diesen Querströmungsbetrieb liegt vor, wenn morgens die Luft in einem Schlafzimmer verbraucht ist, in einem anderen Raum, bspw. dem Wohnzimmer, dagegen nicht verbraucht ist. Die Steuer- und/oder Regeleinrichtung betreibt dann den Ventilator in dem Wohnzimmer so, dass im Zuluftbetrieb die zugeführte Luftmenge gesteigert ist und den Ventilator im Schlafzimmer so, dass die im Abluftbetrieb abgeführte Luftmenge ebenfalls entsprechend größer ist. Hierdurch entsteht eine Luftströmung, die verstärkt verbrauchte Luft aus dem Schlafzimmer abführt und über das Wohnzimmer unverbrauchte Luft zuführt.

Grundsätzlich kann die Vergrößerung der zugeführten oder abgeführten Luftmenge auf verschiedene Arten erfolgen. So ist es bspw. möglich, dass die Ventilatoren mit höherer Leistung betrieben werden, so dass sich bspw. die Drehgeschwindigkeit der Ventilatoren erhöht. Alternativ oder zusätzlich hierzu ist es bspw. auch möglich, die Zeitspannen für den Zuluftbetrieb und für den Abluftbetrieb entsprechend zu verlängern.

In dem optionalen zweiten Betriebszustand kann die im Zuluftbetrieb durch den wenigstens einen ersten Ventilator zugeführte Luftmenge um 2 % bis 15 %, vorzugsweise um etwa 5 %, größer als durch die wenigstens einen zweiten Ventilator zugeführte Luftmenge sein. Entsprechend kann die im Abluftbetrieb durch wenigstens einen Ventilator abgeführte Luftmenge um 2 % bis 15 %, vorzugsweise um etwa 5 %, kleiner sein als die durch den wenigstens einen anderen Ventilator abgeführte Luftmenge.

In einem optionalen dritten Betriebszustand werden die Ventilatoren ebenfalls in einem Zyklus alternierend für eine erste Zeitspanne im Zuluftbetrieb und für eine anschließende zweite Zeitspanne im Abluftbetrieb betrieben. Dabei ist die im Zuluftbetrieb zugeführte Luftmenge wenigstens eines ersten Ventilators größer als im ersten Betriebszustand. Zusätzlich ist für den dritten Betriebszustand in dem Lüftungssystem ein sowohl während der ersten als auch während der zweiten Zeitspanne im Abluftbetrieb betriebener Ventilator vorgesehen, bspw. in einem fensterlosen Feuchtraum. Auf diese Weise wird erreicht, dass trotz des Betriebs des Abluftventilators die Wärmetauscher der übrigen Einzelraumlüftungsgeräte nicht vollständig entladen werden, sondern durch definiert zugeführte zusätzliche Zuluft eine ausgeglichene Volumenstrombilanz erreicht wird. Die Wärmetauscher können folglich dadurch wieder aufgeladen werden, dass aus einzelnen Räumen trotz Betriebs des Abluftventilators des Feuchtraums ebenfalls Abluft aus den Räumen geleitet wird, weil die Volumenstrombilanz durch die gesteigerte Zuluftzufuhr durch andere Wärmetauscher erreicht wird.

Nach einer bevorzugten Ausführungsform der Erfindung ist in dem optionalen dritten Betriebszustand die im Zuluftbetrieb zugeführte zusätzliche Luftmenge wenigstens eines ersten Ventilators um 10 m³/h bis 100 m³/h, vorzugsweise um etwa 60 m³/h, größer als in dem ersten Betriebszustand.

Die erste Zeitspanne und die zweite Zeitspanne sind nach einer bevorzugten Ausführungsform in wenigstens einem der Betriebszustände gleich. Vorzugsweise sind die ersten und zweiten Zeitspannen in sämtlichen Betriebszuständen gleich. Die erste Zeitspanne und/oder die zweite Zeitspanne können jeweils etwa 30 Sekunden bis etwa 180 Sekunden betragen.

Nach einer weiteren bevorzugten Ausführungsform der Erfindung ist wenigstens einem der Einzelraumlüftungsgeräte ein weiteres, vorzugsweise baugleiches, Einzelraumlüftungsgerät innerhalb eines zu lüftenden Raumes zugeordnet. Die beiden Einzelraumlüftungsgeräte können dabei eine Funktionseinheit bzw. ein Gerätepaar bilden. Die Einzelraumlüftungsgeräte sind dabei vorzugsweise in unmittelbarer Nähe zueinander, bspw. direkt aneinander angrenzend, vorgesehen. Die Steuer- und/oder Regeleinrichtung ist dabei vorzugsweise so eingerichtet, dass eines der beiden Einzelraumlüftungsgeräte im Zuluftbetrieb arbeitet, während das andere der beiden Einzelraumlüftungsgeräte im Abluftbetrieb arbeitet. Die beiden Einzelraumlüftungsgeräte werden in den verschiedenen Betriebszuständen ebenfalls alternierend betrieben, so dass durch eines der Einzelraumlüftungsgeräte Zuluft zugeführt wird, während durch das andere Einzelraumlüftungsgerät Abluft abgeführt wird, wobei sich die Betriebsweise der beiden Einzelraumlüftungsgeräte regelmäßig ändert. Auf diese Weise wird immer einer Wärmetauscher beladen, während der andere Wärmetauscher entladen wird.

In Weiterbildung dieses Erfindungsgedankens kann die Steuer- und/oder Regeleinrichtung die Ventilatoren der beiden Einzelraumlüftungsgeräte im zweiten und/oder dritten Betriebszustand mit unterschiedlicher Leistung betreiben bzw. so, dass im Zuluftbetrieb und/oder im Abluftbetrieb die aus dem Raum, in dem die beiden Einzelraumlüftungsgeräte vorgesehen sind, zugeführte oder abgeführte Luftmenge größer ist als im ersten Betriebszustand.

Ein erfindungsgemäßes Lüftungssystem besteht unabhängig von den zuvor genannten Merkmalen aus mehreren Einzelraumlüftungsgeräten und einer Steuer- und/oder Regeleinrichtung, die zur Steuerung des Betriebszustands der Einzelraumlüftungsgeräte mit diesen verbunden ist. Die Einzelraumlüftungsgeräte weisen dabei jeweils einen Wärmetauscher, bspw. einen von der Zu- oder Abluft durchströmten Keramikblock, sowie einen alternierend betreibbaren Ventilator auf. Es wird besonders bevorzugt, wenn alle oder mehrere der Einzelraumlüftungsgeräte baugleich sind. Dies bringt nicht nur Kostenvorteile und eine Vereinfachung der Montage mit sich, sondern erleichtert auch die Steuerung oder Regelung der verschiedenen Betriebszustände der Einzelraumlüftungsgeräte.

In der Steuer- und/oder Regeleinrichtung sind nach einer bevorzugten Ausführungsform mehrere Betriebszustände für die Ventilatoren der Einzelraumlüftungsgeräte gespeichert. Die Steuer- und/oder Regeleinrichtung kann eine zentrale Bedieneinheit umfassen, mit welcher entweder von Nutzern bedarfsgerecht verschiedene Betriebszustände, bspw. der oben genannte erste, zweite und/oder dritte Betriebszustand, einstellbar ist, oder welche selbsttätig entweder nach einstellbaren Bedarfszeiten oder geregelt über Messwerten von Sensoren Betriebszustände auswählt und einstellt.

Es wird bevorzugt, wenn in einem zu lüftenden Raum zwei, insbesondere baugleiche, Einzelraumlüftungsgeräte in unmittelbarer Nähe, bspw. direkt nebeneinander, angeordnet sind, wobei die Steuer- und/oder Regeleinrichtung derart eingerichtet ist, dass in zumindest einem Betriebszustand eines der beiden Einzelraumlüftungsgeräte im Zuluftbetrieb betrieben wird, wenn das andere der beiden Einzelraumlüftungsgeräte im Abluftbetrieb betrieben wird. Die Anordnung der beiden Einzelraumlüftungsgeräte nebeneinander schließt auch eine Anordnung der Einzelraumlüftungsgeräte übereinander ein. Bei dem alternierenden Betrieb der beiden Einzelraumlüftungsgeräte wird immer einer der Wärmetauscher beladen, während der andere Wärmetauscher entladen wird. Die beiden Einzelraumlüftungsgeräte bilden vorzugsweise eine Funktionseinheit bzw. ein Gerätepaar.

Das erfindungsgemäße Lüftungssystem eignet sich sowohl für den Einbau in Neubauten als auch für die Nachrüstung. Der Einbau kann dadurch erleichtert werden, dass wenigstens eines der Einzelraumlüftungsgeräte ein zumindest im Wesentlichen zylindrisches Gehäuse aufweist, das in einen Baustein mit einer Durchgangsöffnung zur Aufnahme des Einzelraumlüftungsgeräts eingebracht werden kann. Ein solcher Baustein kann entweder im Wesentlichen kubisch sein, so dass er bei einem Neubau leicht in einer zu errichtende Außenwand integriert werden kann, oder zylindrisch sein, so dass er in eine nachträglich in einer Außenwand erstellte Bohrung eingesetzt werden kann.

Dabei ist es möglich, einen solchen Baustein, der bspw. aus EPP bestehen kann, während der Errichtung der Außenwand in diese zu integrieren und das Einzelraumlüftungsgerät erst nachträglich in die entsprechende Durchgangsöffnung des Bausteins einzusetzen. Die Durchgangsöffnung zur Aufnahme des Einzelraumlüftungsgeräts kann bspw. mit einem Absatz versehen sein, so dass die Position des Einzelraumlüftungsgeräts innerhalb des Bausteins definiert festgelegt werden kann. Es wird bevorzugt, wenn die Durchgangsöffnung von innen nach außen leicht abfallend angeordnet ist, so dass Kondensat aus dem Gebäude nach außen abfließen kann.

Nach einer besonders bevorzugten Ausführungsform des Bausteins weist dieser einen Nut und an einer gegenüberliegenden Seite eine Feder zur Verbindung mehrerer Bausteine untereinander auf. Dies ermöglicht die nebeneinanderliegende Anordnung von bspw. zwei Einzelraumlüftungsgeräten mit definiertem Abstand zueinander, so dass eine einheitliche Blende für beide Geräte (d.h. für eine Funktionseinheit bzw. ein Gerätepaar) vorgesehen werden kann. Eine solche Nut-Feder-Verbindung erlaubt durch die durchgängige Schiebeverbindung eine schnelle und sichere Verbindung zweier Bausteine. Vorzugsweise ist die Nut-Feder-Verbindung mit einer positiven Omega-Feder und einer negativen Omega-Nut ausgestaltet. Alternativ hierzu ist bspw. eine Schwalbenschwanzverbindung möglich. Auf diese Weise sind Bausteine nach dem Zusammenschieben in Längsrichtung fest miteinander verbunden und können auch nur wieder durch Längsverschieben voneinander getrennt werden.

Weitere Vorteile und Anwendungsmöglichkeiten des erfindungsgemäßen Verfahrens und des erfindungsgemäßen Lüftungssystems ergeben sich aus der nachfolgenden Beschreibung von Ausführungsbeispielen.

Eine Funktionseinheit bestehen in einer bevorzugten Ausführungsform aus zwei Einzelraumlüftungsgeräten, welche jeweils einen Innenraumfilter, Wärmetauscher, Ventilator und Außenfilter aufweisen. Diese Bauteile jedes Einzelraumlüftungsgeräts sind jeweils in ein Kunststoffrohr als Gehäuse eingebaut. Dieses Kunststoffrohr wird mit diesen Bauteilen als eine Einheit in einen kreisrunden Ausschnitt in einem EPP-Gehäuse (Baustein) eingesteckt. Beide Einzelraumlüftungsgeräte arbeiten gemeinsam im Gegenstromprinzip, wobei eines der beiden Einzelraumlüftungsgeräte immer Zuluft und eines der Einzelraumlüftungsgeräte immer Abluft fördert. Beide Einzelraumlüftungsgeräte sind im Standardbetrieb auf bspw. drei unterschiedliche Leistungsstufen einstellbar. Im Standardbetrieb arbeiten beide Einzelraumlüftungsgeräte immer mit dem gleichen Volumenstrom (Zuluft = Abluft). Nach einer definierten Zeit drehen beide Ventilatoren in den Einzelraumlüftungsgeräten gleichzeitig die Laufrichtung und das Zuluft- Einzelraumlüftungsgerät wird zum Abluft- Einzelraumlüftungsgerät und umgekehrt. Dieser Vorgang wiederholt sich während des gesamten Betriebszeitraumes der Einzelraumlüftungsgeräte. Durch diese alternierende Funktionsweise wird eine konstante Wärmerückgewinnung über den gesamten Betriebszeitraum durch Beladen (Abluft = warme Innenluft) und Entladen (kalte Außenluft) sichergestellt.

Alternativ kann eine Funktionseinheit aus nur einem Einzelraumlüftungsgerät bestehen, welches einen Innenraumfilter, Wärmetauscher, Ventilator, und Außenfilter aufweist. Diese Bauteile sind in ein Kunststoffrohr als Gehäuse eingebaut. Dieses Kunststoffrohr wird mit diesen Bauteilen als eine Einheit in einen kreisrunden Ausschnitt in einem EPP-Gehäuse (Baustein) eingesteckt. Das Einzelraumlüftungsgerät arbeitet in alternierender Betriebsweise. Nach einer bestimmten Laufzeit im Zuluftbetrieb wechselt der Ventilator in dem Einzelraumlüftungsgerät die Drehrichtung und befindet sich im Abluftbetrieb. Durch diesen Wechsel der Laufrichtung wird der Wärmetauscher je nach Laufrichtung beladen oder entladen.

In einer Wohnung sind mehrere Einzelraumlüftungsgeräte bzw. Funktionseinheiten installiert. Um innerhalb der Wohnung eine Querströmung zu erhalten, wird eine bestimmte Anzahl an Einzelraumlüftungsgeräten mit zusätzlich 5% Zuluft betrieben. Die in der Wohnung befindlichen Räume bilden durch Türunterschnitte in einem Lüftungsverbund. Die gleiche Anzahl an Einzelraumlüftungsgeräten wird mit zusätzlich 5% Abluft betrieben. Durch diese Schaltungsweise kann innerhalb der Wohnung eine gleichmäßige Querströmung erreicht werden. Diese 5 % Zuluft oder Abluft kann bei Bedarf an jedem der Einzelraumgeräte aktiviert bzw. deaktiviert werden. Durch die Deaktivierung dieser Querströmfunktion kann das in einem Abluftraum, wie Badezimmer, Küche oder WC, installierte Einzelraumgerät immer in einer balancierten Betriebsweise betreiben werden, wodurch ein Überströmen von verbrauchter Luft aus diesem Raum verhindert wird.

### Beispiel 1: Querströmungsprinzip

In dieser Konstellation werden nun zwei Einzelraumlüftungsgeräte (Wohnzimmer und Esszimmer) mit zusätzlich 5% Zuluft zu den eingestellten 20m³/h eingestellt. Zwei weitere Einzelraumlüftungsgeräte (Kinderzimmer und Schlafzimmer) werden mit zusätzlich 5% Abluft zu den eingestellten 20 m³/h eingestellt. Der 5%ige Luftüberschuss aus Wohnzimmer und Esszimmer strömt nun in Richtung des 5%igen Abluftüberschuss in Richtung Kinderzimmer und Schlafzimmer. Die beiden Nassräume (Küche und Badzimmer) werden aber in einer balancierten Betriebsweise (Zuluft = Abluft) betrieben. Somit wird das Überströmen aus diesen Räumen verhindert.

Dieser Betriebszustand ist in der nachfolgenden Tabelle dargestellt.

| **Zimmerart** | **Abluft** | **Zuluft** |
|---|---|---|
| Wohnzimmer | 20m³/h | 20m³/h + 5% |
| Esszimmer | 20m³/h | 20m³/h + 5% |
| Kinderzimmer | 20m³/h +5% | 20m³/h |
| Schlafzimmer | 20m³/h +5% | 20m³/h |
| Küche | 35m³/h | 35m³/h |
| Badezimmer | 35m3/h | 35m³/h |

Ein unabhängiger Aspekt der vorliegenden Erfindung ist dabei die oben genannte Querströmung durch die Einstellbarkeit der Ventilatoren mit einem Zuluft-überschuss und Abluftüberschuss.

### Beispiel 2: Nachströmung bei zusätzlichem Abluftbetrieb durch Abluftventilator

In demselben wie oben beschriebenem Gebäudegrundriss bestehend aus Badezimmer, Küche, Wohnzimmer, Kinderzimmer und Esszimmer befindet sich nun das Badezimmer im innenliegenden Bereich und ist fensterlos. Die Normung fordert hierfür eine zusätzliche Abluftmaßnahme, um verbrauchte und feuchte Badezimmerluft zum Schutz des Gebäudes aus dem Gebäude zu fördern. Hierzu wird ein Abluftventilator mit einer Abluftleistung von 60m³/h installiert. Dieser Abluftventilator ist durch eine Abluftleitung, meistens in einem Schacht über Dach, entlüftet.

Beim Betrieb dieses Abluftventilators, welcher meistens durch das Einschalten der Badezimmerbeleuchtung aktiviert wird, entsteht innerhalb der Wohnung ein Zuluft-Defizit von 60m³/h während der Betriebszeit. Die Einzelraumlüftungsgeräte können nun so geregelt werden, dass während des Betriebs des Abluftventilator, welcher mit der Hauptregelung der Einzelraumlüftungsgeräte verbunden ist, ein zusätzlicher Zuluftvolumenstrom von 10, 12.5, 15, 20 oder 30m³/h bereitgestellt wird. Durch das Einschalten des Abluftventilators wird ein Signal an die Einzelraumlüftungsgeräte ausgegeben, wodurch diese Ihre Zuluftleistung je nach Anzahl angeschlossener Einzelraumlüftungsgeräte erhöhen.

Die in dem obigen Beispiel genannten Leistungsbereiche ergeben sich aus folgender Tabelle:

| **Abluftventilator** | **Anzahl Einzelraumlüftungsgeräte** | **Zuluftaufschlag** |
|---|---|---|
| 60 m³/h | 2 | 2 x 30 m³/h = 60 m³/h |
| 60 m³/h | 3 | 3 x 20 m³/h = 60 m³/h |
| 60 m³/h | 4 | 4 x 15 m³/h = 60 m³/h |
| 60 m³/h | 5 | 5 x 12,5 m³/h = 60m³/h |
| 60 m³/h | 6 | 6 x 10 m³/h = 60m³/h |

Der oben aufgeführte Zuluftzuschlag ist zusätzlich zum eingestellten Zuluftbetrieb je Funktionseinheit bzw. Einzelraumlüftungsgerät zu addieren. Ist eine Funktionseinheit z.B. auf einen Volumenstrom von 20 m³/h eingestellt ist der in der Tabelle angegebene Wert je nach Anzahl der Einzelraumlüftungsgeräte aufzuschlagen.

Durch diese Regelungsmöglichkeit ist eine ständige Balance innerhalb der Wohnung gewährleistet, unabhängig davon, ob ein zusätzlicher Ventilator im Bad, der Küche und/oder dem WC installiert ist. Es entsteht über die gesamte Betriebszeit ob mit oder ohne Abluftventilator eine ausgeglichene Luftströmung zwischen Zuluft und Abluft innerhalb der Nutzungseinheit bzw. Wohnung.

Ein unabhängiger Aspekt der vorliegenden Erfindung ist dabei die variable Einstellmöglichkeit der Zuluftmenge in Verbindung mit einem Abluftventilator, unabhängig der Anzahl installierter Einzelraumlüftungsgeräte. Auch die ständige Balance zwischen Zu- und Abluft ist ein unabhängiger Aspekt der vorliegenden Erfindung.

Die Erfindung wird nachfolgend anhand von Ausführungsbeispielen und unter Bezugnahme auf die Zeichnung näher erläutert. Es zeigen schematisch:
- Fig. 1: in Perspektivansicht einen Baustein zur Aufnahme eines Einzelraumlüftungsgerätes nach einer ersten Ausführungsform der Erfindung,
- Fig. 2: in Frontansicht einen Baustein zur Aufnahme eines Einzelraumlüftungsgerätes nach einer zweiten Ausführungsform der Erfindung,
- Fig. 3: die Komponenten eines Lüftungssystems nach einer Ausführungsform der Erfindung,
- Fig. 4: in schematischer Darstellung ein in eine Wohnung integriertes erfindungsgemäßes Lüftungssystem im ersten Betriebszustand,
- Fig. 5: das Lüftungssystem nach Fig. 4 im zweiten Betriebszustand und
- Fig. 6: ein gegenüber Fig. 4 modifiziertes Lüftungssystem in einem dritten Betriebszustand.

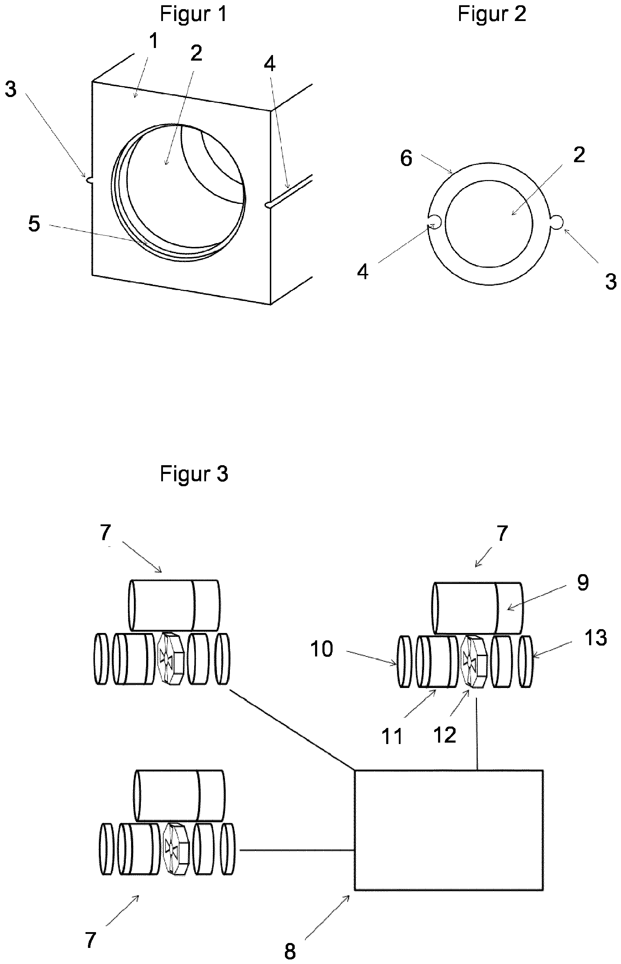

Fig. 1 zeigt ausschnittsweise einen im Wesentlichen kubischen Baustein 1, der eine Durchgangsöffnung 2 mit kreisrundem Querschnitt aufweist. Auf der in Fig. 1 linken Seite ist eine Omega-förmige Feder 3 ausgebildet und auf der gegenüberliegenden, in Fig. 1 rechten Seite ist eine bestehende Omega-förmige Nut 4 ausgebildet. Die Feder 3 und die Nut 4 sind so gestaltet, dass zwei baugleiche Bausteine 1 miteinander dadurch verbunden werden können, dass die Nut 3 eines Bausteins in die Feder 4 eines anderen Bausteins eingeschoben wird. In der Durchgangsöffnung 2 ist ein Absatz 5 vorgesehen, der zur definierten Befestigung eines unten näher beschriebenen Einzelraumlüftungsgeräts dienen kann.

In Fig. 2 ist ein im Aufbau ähnlicher Baustein 6 dargestellt, der allerdings eine im Wesentlichen zylindrische Außenfläche aufweist. Der Baustein 6 ist ebenfalls zur Aufnahme eines Einzelraumlüftungsgeräts mit einer Durchgangsöffnung 2 versehen und weist eine Omega-förmige Feder 3 und eine Omega-förmige Nut 4 auf.

Ein erfindungsgemäßes Lüftungssystem ist in Fig. 3 dargestellt. Das Lüftungssystem besteht in dieser Ausführungsform aus drei Einzelraumlüftungsgeräten 7, die mit einer Steuer- und/oder Regeleinrichtung 8 verbunden sind. Jedes der Einzelraumlüftungsgeräte 7 weist in der dargestellten Ausführungsform ein zylindrisches Gehäuse 9, einen Abluftfilter 10, einen Wärmetauscher 11, einen Ventilator 12 und einen Zuluftfilter 13. Die Größe des Gehäuses 9 ist dabei vorzugsweise an die Größe der Durchgangsöffnung in dem Baustein 1 bzw. 6 angepasst, so dass das Gehäuse 9 als eine Einheit zusammen mit dem Abluftfilter, dem Wärmetauscher 11, dem Ventilator 12 und dem Zuluftfilter 13 in den Baustein 1 bzw. den Baustein 6 eingesetzt werden kann.

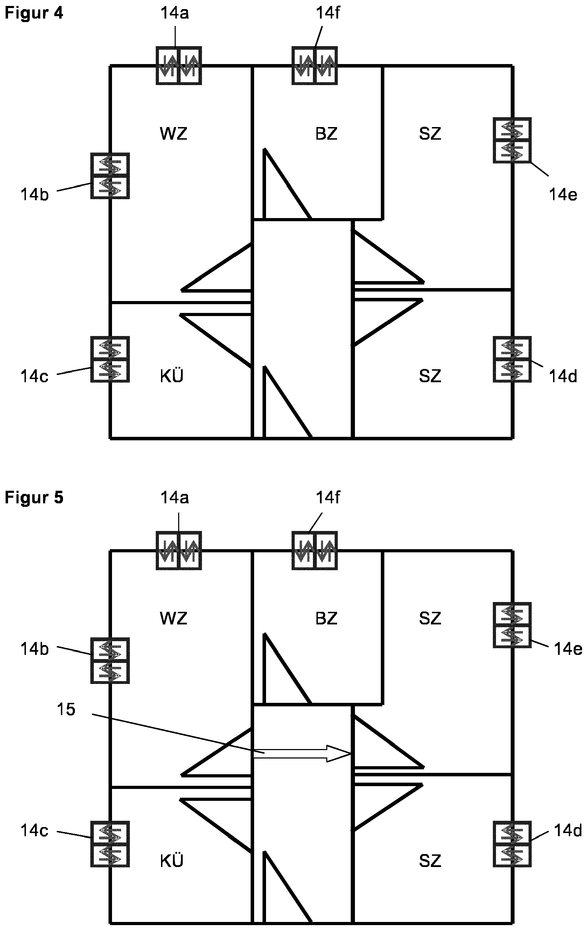

In Fig. 4 ist schematisch eine Wohnung angedeutet, die ein Wohnzimmer WZ, ein Badezimmer BZ, zwei Schlafzimmer SZ und eine Küche KÜ aufweist. Diese Räume sind über einen gemeinsamen Flur miteinander verbunden. In dieser Wohnung ist ein erfindungsgemäßes Lüftungssystem vorgesehen, wobei jeweils zwei Einzelraumlüftungsgeräte 7 nebeneinander zu einer Funktionseinheit 14a bis 14f zusammengefasst sind. Dabei sind im Wohnzimmer zwei solcher Funktionseinheiten 14a, 14b vorgesehen, während in den übrigen Räumen jeweils nur eine Funktionseinheit 14c, 14d, 14e und 14f vorgesehen ist. Die in Fig. 4 nicht dargestellte Steuer- und/oder Regeleinrichtung 8 ist in dem ersten Betriebszustand nach Fig. 4 so eingerichtet, dass für eine erste Zeitspanne eines der beiden Einzelraumlüftungsgeräte 7 jeder Funktionseinheit 14 a bis 14f im Zuluftbetrieb betrieben wird, wodurch der Ventilator 12 Zuluft durch den Zuluftfilter 13, den Wärmetauscher 11 und den Abluftfilter 10 in den jeweiligen Raum leitet, während das andere Einzelraumlüftungsgerät 7 jeder Funktionseinheit 14a bis 14f im Abluftbetrieb Luft aus dem jeweiligen Raum über den Abluftfilter 10, dem Wärmetauscher 11 und den Zuluftfilter 13 aus dem Raum fördert. Nach Ablauf der ersten Zeitspanne wird für eine, vorzugsweise gleichlange, Zeitspanne von bspw. 90 Sekunden die Drehrichtung in jedem der Ventilatoren 12 so geändert, dass die während der ersten Zeitspanne im Zuluftbetrieb betriebenen Einzelraumlüftungsgeräte 7 während der zweiten Zeitspanne im Abluftbetrieb betrieben werden und die während der ersten Zeitspanne im Abluftbetrieb betriebenen Einzelraumlüftungsgeräte 7 während der zweiten Zeitspanne im Zuluftbetrieb betrieben werden. Auf diese Weise werden die Wärmetauscher alternierend be- und entladen. In dem in Fig. 4 gezeigten ersten Betriebszustand ist die im Zuluftbetrieb zugeführte Luftmenge des Lüftungssystems so groß wie die im Abluftbetrieb abgeführte Luftmenge des Lüftungssystems. Es entsteht auf diese Weise keine Querströmung zwischen den einzelnen Räumen der Wohnung.

Fig. 5 stellt die Wohnung wie in Fig. 4 mit den selben Funktionseinheiten 14a bis 14f in den einzelnen Räumen dar, wobei die Steuer- und/oder Regeleinrichtung 8 (nicht gezeigt) in einem zweiten Betriebszustand bei der Funktionseinheit 14a den jeweils in Zuluftbetrieb betriebenen Ventilator so betreibt, dass eine um bspw. 5 % größere Luftmenge als im ersten Betriebszustand in das Wohnzimmer WZ geleitet wird. Gleichzeitig wird in einem der Schlafzimmer SZ das jeweils im Abluftbetrieb betriebene Einzelraumlüftungsgerät 7 der Funktionseinheit 14e durch die Steuer- und/oder Regeleinrichtung 8 so betrieben, dass eine um bspw. 5 % größere Abluftmenge als im ersten Betriebszustand aus dem Raum abgeführt wird. Hierdurch entsteht eine durch den Pfeil 15 in Fig. 5 dargestellte Querlüftung zwischen dem Wohnzimmer WZ und dem in Fig. 5 rechts oben angeordneten Schlafzimmer SZ.

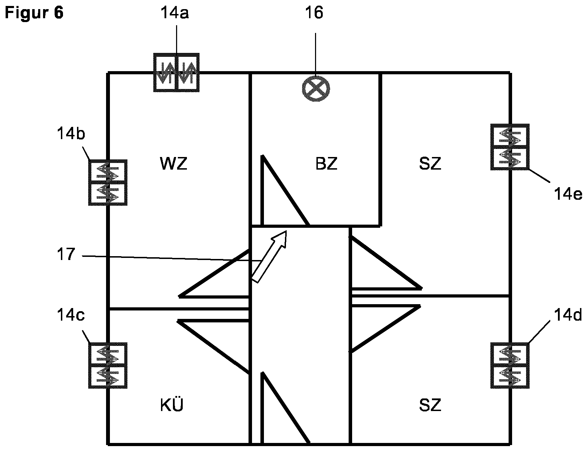

In dem in Fig. 6 dargestellten dritten Betriebszustand ist das Badezimmer BZ der Wohnung als ein fensterloser Raum gestaltet, der mit einem Abluftventilator 16 versehen ist, der nach DIN 18017 während und nach der Nutzung des Badezimmers BZ für einen längeren Zeitraum betriebenen wird, um Feuchtigkeit und verbrauchte Luft aus diesem Raum abzuführen. Für eine ausgeglichene Volumenstrombilanz innerhalb der Wohnung während des Betriebs des Abluftventilators 16 wird das jeweils im Zuluftbetrieb betriebene Einzelraumlüftungsgerät der Funktionseinheit 14a und/oder der Funktionseinheit 14b so betrieben, dass gegenüber dem ersten Betriebszustand eine größere Zuluftmenge in das Wohnzimmer WZ eingebracht wird, so dass eine Querströmung von dem Wohnzimmer WZ in das Badezimmer BZ entsteht. Da die durch einen Abluftventilator nach DIN 18017 abgeführte Luftmenge häufig größer ist als der von einem Einzelraumlüftungsgerät 7 zusätzlich in die Wohnung einbringbaren Zuluftstrom, werden vorzugsweise mehrere Funktionseinheiten 14a, 14b, 14d und 14e in dem dritten Betriebszustand so betrieben, dass das jeweils im Zuluftbetrieb betriebene Einzelraumlüftungsgerät 7 einen erhöhten Zuluftstrom in die Wohnung fördert. Ausgenommen von dieser erhöhten Zuluftströmung ist bspw. die Funktionseinheit 14c in der Küche KÜ, so dass keine verbrauchte und/oder mit Feuchtigkeit beladene Luft aus der Küche KÜ in die übrigen Räume strömen kann.

### Bezugszeichenliste

- 1: Baustein
- 2: Durchgangsöffnung
- 3: Feder
- 4: Nut
- 5: Absatz
- 6: Baustein
- 7: Einzelraumlüftungsgerät
- 8: Steuer- und/oder Regeleinrichtung
- 9: Gehäuse
- 10: Abluftfilter
- 11: Wärmetauscher
- 12: Ventilator
- 13: Zuluftfilter
- 14a bis 14f: Funktionseinheit
- 15: Luftstrom
- 16: Abluftventilator
- 17: Luftstrom

- WZ: Wohnzimmer
- BZ: Badezimmer
- SZ: Schlafzimmer
- KÜ: Küche

## Patentansprüche

1. Verfahren zur Raumlüftung mittels eines Lüftungssystems bestehend aus mehreren, vorzugsweise baugleichen, Einzelraumlüftungsgeräten (7), die jeweils einen Wärmetauscher (11) und einen alternierend betreibbaren Ventilator (12) aufweisen, und einer Steuer- und/oder Regeleinrichtung (8), die mit den Ventilatoren (12) der Einzelraumlüftungsgeräte (7) verbunden ist, wobei das Verfahren mehrere bedarfsweise einstellbare Betriebszustände aufweist, von denen
in einem ersten Betriebszustand die Ventilatoren (12) in einem Zyklus alternierend für eine erste Zeitspanne im Zuluftbetrieb und für eine anschließende zweite Zeitspanne im Abluftbetrieb derart betrieben werden, dass die im Zuluftbetrieb zugeführte Luftmenge des Lüftungssystems der im Abluftbetrieb abgeführten Luftmenge des Lüftungssystems entspricht, und
in einem zweiten Betriebszustand die Ventilatoren (12) in einem Zyklus alternierend für eine erste Zeitspanne im Zuluftbetrieb und für eine anschließende zweite Zeitspanne im Abluftbetrieb derart betrieben werden, dass die im Zuluftbetrieb zugeführte Luftmenge wenigstens eines ersten Ventilators (12) größer als die wenigstens eines zweiten Ventilators (12) ist und die im Abluftbetrieb abgeführten Luftmenge wenigstens eines Ventilators (12) kleiner als die wenigstens eines anderen Ventilators (12) ist, wobei die im Zuluftbetrieb zugeführte Luftmenge des Lüftungssystems der im Abluftbetrieb abgeführten Luftmenge des Lüftungssystems entspricht, und/oder
in einem dritten Betriebszustand die Ventilatoren (12) in einem Zyklus alternierend für eine erste Zeitspanne im Zuluftbetrieb und für eine anschließende zweite Zeitspanne im Abluftbetrieb derart betrieben werden, dass die im Zuluftbetrieb zugeführte Luftmenge wenigstens eines ersten Ventilators (12) größer ist als im ersten Betriebszustand, wobei zusätzlich ein während der ersten und der zweiten Zeitspanne betriebener Ventilator (16) in dem Lüftungssystem vorgesehen ist.

2. Verfahren nach Anspruch 1, **dadurch gekennzeichnet, dass** im zweiten Betriebszustand die im Zuluftbetrieb durch den wenigstens einen ersten Ventilator (12) zugeführte Luftmenge um 2% bis 15%, vorzugsweise um etwa 5%, größer als die durch den wenigstens einen zweiten Ventilator (12) zugeführte Luftmenge ist, und dass die im Abluftbetrieb durch den wenigstens einen Ventilator (12) abgeführten Luftmenge um 2% bis 15%, vorzugsweise um etwa 5%, kleiner als die durch den wenigstens einen anderen Ventilator (12) abgeführte Luftmenge ist.

3. Verfahren nach Anspruch 1 oder 2, **dadurch gekennzeichnet, dass** im dritten Betriebszustand die im Zuluftbetrieb zugeführte Luftmenge des wenigstens einen ersten Ventilators (12) um 10 m³/h bis 100 m³/h, insbesondere um etwa 60 m³/h, größer ist als im ersten Betriebszustand.

4. Verfahren nach einem der Ansprüche 1 bis 3, **dadurch gekennzeichnet, dass** die erste Zeitspanne und die zweite Zeitspanne jeweils etwa 30 Sekunden bis etwa 180 Sekunden betragen.

5. Verfahren nach einem der Ansprüche 1 bis 4, **dadurch gekennzeichnet, dass** wenigstens einem der Einzelraumlüftungsgeräte (7) ein weiteres, vorzugsweise baugleiches, Einzelraumlüftungsgerät (7) innerhalb eines zu lüftenden Raumes (WZ, SZ, BZ, KÜ) zugeordnet ist, wobei eines der beiden Einzelraumlüftungsgeräte (7) im Zuluftbetrieb arbeitet, während das andere der beiden Einzelraumlüftungsgeräte (7) im Abluftbetrieb arbeitet.

6. Verfahren nach Anspruch 5, **dadurch gekennzeichnet, dass** die Steuer- und/oder Regeleinrichtung (8) die Ventilatoren (12) der beiden Einzelraumlüftungsgeräte (7) im zweiten und dritten Betriebszustand mit unterschiedlicher Leistung betreibt.

7. Lüftungssystem mit mehreren, vorzugsweise baugleichen, Einzelraumlüftungsgeräten (7), die jeweils einen Wärmetauscher (11) und einen alternierend betreibbaren Ventilator (12) aufweisen, und mit einer Steuer- und/oder Regeleinrichtung (8) konfiguriert zur Durchführung des Verfahrens nach einem der vorhergehenden Ansprüche, die mit den Ventilatoren (12) der Einzelraumlüftungsgeräte (7) verbunden ist.

8. Lüftungssystem nach Anspruch 7, **dadurch gekennzeichnet, dass** in der Steuer- und/oder Regeleinrichtung (8) mehrere Betriebszustände für die Ventilatoren (12) der Einzelraumlüftungsgeräte (7) gespeichert sind.

9. Lüftungssystem nach Anspruch 7 oder 8, **dadurch gekennzeichnet, dass** in einem zu lüftenden Raum (WZ, SZ, BZ, KÜ) zwei, insbesondere baugleiche, Einzelraumlüftungsgeräte (7) nebeneinander angeordnet sind, wobei die Steuer- und/oder Regeleinrichtung (8) derart eingerichtet ist, dass in zumindest einem Betriebszustand eines der beiden Einzelraumlüftungsgeräte (7) im Zuluftbetrieb betrieben wird, wenn das andere der beiden Einzelraumlüftungsgeräte (7) im Abluftbetrieb betrieben wird.

10. Lüftungssystem nach einem der Ansprüche 7 bis 9, **dadurch gekennzeichnet, dass** wenigstens eines der Einzelraumlüftungsgeräte (7) ein zumindest im Wesentlichen zylindrisches Gehäuse (9) aufweist, das in einem zumindest Baustein (1, 6) mit einer Durchgangsöffnung (2) zur Aufnahme des Einzelraumlüftungsgerätes (7) aufgenommen ist, wobei der Baustein (1, 6) vorzugsweise eine Nut (4) und an einer gegenüberliegenden Seitenfläche eine Feder (3) zur Verbindung mehrerer Bausteine (1, 6) untereinander aufweist.

## Claims

1. A method for room ventilation by means of a ventilation system consisting of multiple, preferably identical, individual room ventilation devices (7) which each have a heat exchanger (11) and a fan (12) which can be operated alternatingly, and of a control and/or regulation device (8) which is connected to the fans (12) of the individual room ventilation devices (7), the method having multiple operating modes which can be set as required, by which
in a first operating mode, the fans (12) are operated alternatingly in a cycle, in supply air mode for a first time period and in exhaust air mode for a subsequent, second time period, such that the amount of air supplied in supply air mode in the ventilation system corresponds to the amount of air extracted in exhaust air mode in the ventilation system, and
in a second operating mode, the fans (12) are operated alternatingly in a cycle, in supply air mode for a first time period and in exhaust air mode for a subsequent, second time period, such that the amount of air supplied in supply air mode by at least one first fan (12) is greater than that of at least one second fan (12), and the amount of air extracted in exhaust air mode by at least one fan (12) is smaller than that of at least one other fan (12), wherein the amount of air supplied in supply air mode in the ventilation system corresponds to the amount of air extracted in exhaust air mode in the ventilation system, and/or
in a third operating mode, the fans (12) are operated alternatingly in a cycle, in supply air mode for a first time period and in exhaust air mode for a subsequent, second time period, such that the amount of air supplied in supply air mode by at least one first fan (12) is greater than in the first operating mode, wherein a fan (16) which is operated during the first and second time periods is additionally provided in the ventilation system.

2. The method according to Claim 1,
**characterised in that**
in the second operating mode, the amount of air supplied in supply air mode by the at least one first fan (12) is 2% to 15%, preferably approximately 5%, greater than the amount of air supplied by the at least one second fan (12), and the amount of air extracted in exhaust air mode by the at least one fan (12) is 2% to 15%, preferably approximately 5%, smaller than the amount of air extracted by the at least one other fan (12).

3. The method according to Claim 1 or 2,
**characterised in that**
in the third operating mode, the amount of air supplied in supply air mode by the at least one first fan (12) is 10 m³/h to 100 m³/h, in particular approximately 60 m³/h, greater than in the first operating mode.

4. The method according to any one of Claims 1 to 3,
**characterised in that**
the first time period and the second time period are each approximately 30 seconds to approximately 180 seconds.

5. The method according to any one of Claims 1 to 4,
**characterised in that**
at least one of the individual room ventilation devices (7) is assigned a further, preferably identical, individual room ventilation device (7) within a room (WZ, SZ, BZ, KÜ) to be ventilated, wherein one of the two individual room ventilation devices (7) operates in supply air mode while the other of the two individual room ventilation devices (7) operates in exhaust air mode.

6. The method according to Claim 5,
**characterised in that**
the control and/or regulation device (8) operates the fans (12) of the two individual room ventilation devices (7) at different outputs in the second and third operating modes.

7. A ventilation system having multiple, preferably identical, individual room ventilation devices (7) which each have a heat exchanger (11) and a fan (12) which can be operated alternatingly, and having a control and/or regulation device (8) which is configured to carry out the method according to any one of the preceding claims and is connected to the fans (12) of the individual room ventilation devices (7).

8. The ventilation system according to Claim 7,
**characterised in that**
multiple operating modes for the fans (12) of the individual room ventilation devices (7) are stored in the control and/or regulation device (8).

9. The ventilation system according to Claim 7 or 8,
**characterised in that**
two, in particular identical, individual room ventilation devices (7) are arranged next to each other in a room (WZ, SZ, BZ, KÜ) to be ventilated, wherein the control and/or regulation device (8) is designed such that, in at least one operating mode, one of the two individual room ventilation devices (7) is operated in supply air mode when the other of the two individual room ventilation devices (7) is operated in exhaust air mode.

10. The ventilation system according to any one of Claims 7 to 9,
**characterised in that**
at least one of the individual room ventilation devices (7) has an at least substantially cylindrical housing (9) which is accommodated in at least one module (1, 6) having a through-opening (2) for accommodating the individual room ventilation device (7), wherein the module (1, 6) preferably has a groove (4) and, on an opposing side face, a tongue (3) for connecting multiple modules (1, 6) to one another.

## Revendications

1. Procédé d'aération de pièce au moyen d'un système d'aération composé de plusieurs appareils d'aération de pièce individuels (7), de préférence de même conception, qui comportent respectivement un échangeur de chaleur (11) et un ventilateur (12) utilisable en alternance et un dispositif de commande et/ou de régulation (8) qui est relié aux ventilateurs (12) des appareils d'aération de pièce individuels (7), sachant que le procédé comporte plusieurs états de fonctionnement réglables en cas de besoin, parmi lesquels
dans un premier état de fonctionnement, les ventilateurs (12) sont utilisés dans un cycle alternant pour un premier intervalle de temps en fonctionnement d'alimentation et pour un deuxième intervalle de temps suivant en fonctionnement d'évacuation de telle manière que la quantité d'air acheminée en fonctionnement d'alimentation du système d'aération correspond à la quantité d'air évacuée en fonctionnement d'évacuation du système d'aération, et
dans un deuxième état de fonctionnement, les ventilateurs (12) sont utilisés dans un cycle alternant pour un premier intervalle de temps en fonctionnement d'alimentation et pour un deuxième intervalle de temps suivant en fonctionnement d'évacuation de telle manière que la quantité d'air acheminée en fonctionnement d'alimentation d'au moins un premier ventilateur (12) est supérieure à celle d'au moins un deuxième ventilateur (12) et la quantité d'air évacuée en fonctionnement d'évacuation d'au moins un ventilateur (12) est plus faible que celle d'au moins un autre ventilateur (12), sachant que la quantité d'air acheminée dans le fonctionnement d'alimentation du système d'aération correspond à la quantité d'air évacuée dans le fonctionnement d'évacuation du système d'aération, et/ou
dans un troisième état de fonctionnement, les ventilateurs (12) sont utilisés dans un cycle alternant pour un premier intervalle de temps en fonctionnement d'alimentation et pour un deuxième intervalle de temps suivant en fonctionnement d'évacuation de telle manière que la quantité d'air acheminée en fonctionnement d'alimentation d'au moins un premier ventilateur (12) est supérieure à celle dans le premier état de fonctionnement, sachant qu'en plus un ventilateur (16) utilisé pendant les premier et deuxième intervalles de temps est prévu dans le système d'aération.

2. Procédé selon la revendication 1, **caractérisé en ce que** dans le deuxième état de fonctionnement, la quantité d'air acheminée par au moins un premier ventilateur (12) est de 2 % à 15 % de préférence d'environ 5 %, supérieure à la quantité d'air acheminée par au moins un deuxième ventilateur (12) et **en ce que** la quantité d'air évacuée dans le fonctionnement d'évacuation par au moins un ventilateur (12) est de 2 % à 15 %, de préférence d'environ 5 %, plus faible que la quantité d'air évacuée par au moins un autre ventilateur (12).

3. Procédé selon la revendication 1 ou 2, **caractérisé en ce que** dans le troisième état de fonctionnement, la quantité d'air acheminée en fonctionnement d'alimentation d'au moins un premier ventilateur (12) est de 10 m³/h à 100 m³/h, en particulier d'environ 60 m³/h, supérieure au premier état de fonctionnement.

4. Procédé selon l'une quelconque des revendications 1 à 3, **caractérisé en ce que** le premier intervalle de temps et le deuxième intervalle de temps se situent respectivement de 30 secondes à environ 180 secondes.

5. Procédé selon l'une quelconque des revendications 1 à 4, **caractérisé en ce qu'**au moins un autre appareil d'aération de pièce individuel (7) de préférence de même conception est attribué à au moins un des appareils d'aération de pièce individuels (7) à l'intérieur d'une pièce à aérer (Séjour, Chambre à coucher, Salle de bain, Cuisine), sachant qu'un des deux appareils d'aération de pièce individuels (7) fonctionne en fonctionnement d'alimentation, alors que l'autre des deux appareils d'aération de pièce individuels (7) fonctionne en fonctionnement d'évacuation.

6. Procédé selon la revendication 5, **caractérisé en ce que** le dispositif de commande et/ou de régulation (8) fait fonctionner les ventilateurs (12) des deux appareils d'aération de pièce individuels (7) en deuxième et troisième état de fonctionnement à une puissance différente.

7. Système d'aération avec plusieurs appareils d'aération de pièce individuels (7), de préférence de même conception, qui comportent respectivement un échangeur de chaleur (11) et un ventilateur (12) utilisable en alternance et avec un dispositif de commande et/ou de régulation (8) configuré pour exécuter le procédé selon l'une quelconque des revendications précédentes, qui est relié aux ventilateurs (12) des appareils d'aération de pièce individuels (7).

8. Système d'aération selon la revendication 7, **caractérisé en ce que** plusieurs états de fonctionnement sont mémorisés dans le dispositif de commande et/ou de régulation (8) pour les ventilateurs (12) des appareils d'aération de pièce individuels (7).

9. Système d'aération selon la revendication 7 ou 8, **caractérisé en ce que** deux appareils d'aération de pièce individuels (7), en particulier de la même conception, sont disposés l'un à côté de l'autre dans une pièce à aérer (Séjour, Chambre à coucher, Salle de bain, Cuisine), sachant que le dispositif de commande et/ou de régulation (8) est agencé de telle manière que dans au moins un état de fonctionnement, un des deux appareils d'aération de pièce individuels (7) est utilisé en fonctionnement d'alimentation, alors que l'autre des deux appareils d'aération de pièce individuels (7) est utilisé en fonctionnement d'évacuation.

10. Système d'aération selon l'une quelconque des revendications 7 à 9, **caractérisé en ce qu'**au moins un des appareils d'aération de pièce individuels (7) comporte au moins un boîtier (9) pour l'essentiel cylindrique, qui est logé dans au moins un module (1, 6) avec une ouverture de passage (2) pour loger l'appareil d'aération de pièce individuel (7), sachant que le module (1, 6) comporte de préférence une rainure (4) et un ressort (3) sur une surface latérale opposée pour la liaison de plusieurs modules (1,6) entre eux.
